(19) **Europäisches Patentamt**

**European Patent Office**

**Office européen des brevets**

(11) Numéro de publication : **0 062 594**
**B1**

(12) # FASCICULE DE BREVET EUROPÉEN

(45) Date de publication du fascicule du brevet :
15.08.84

(21) Numéro de dépôt : **82420040.6**

(22) Date de dépôt : **24.03.82**

(51) Int. Cl.³ : **G 03 B 27/73**, G 03 B 27/54

(54) Filtre soustractif pour le tirage de films photographiques en couleur.

(30) Priorité : **03.04.81 FR 8106900**

(43) Date de publication de la demande :
**13.10.82 Bulletin 82/41**

(45) Mention de la délivrance du brevet :
**15.08.84 Bulletin 84/33**

(84) Etats contractants désignés :
**BE CH DE GB IT LI NL SE**

(56) Documents cités :
**FR-A- 1 219 275**
**FR-A- 2 200 976**
**FR-A- 2 381 332**
**US-A- 4 018 527**
**US-A- 4 168 904**

(73) Titulaire : **Kis France Société dite:**
**47 Avenue Marie Reynoard**
**F-38100 Grenoble (FR)**

(72) Inventeur : **Thebault, Claude**
**19, avenue du Vercors**
**F-38240 Meylan (FR)**

(74) Mandataire : **Laurent, Michel et al**
**20 rue Louis Chirpaz Boîte Postale 32**
**F-69130 Lyon-Ecully (FR)**

Jouve, 18, rue St-Denis, 75001 Paris, France

## Description

L'invention concerne un nouveau type de filtre pour le tirage de films photographiques en couleur.

Comme on le sait, un film soustractif est un dispositif formé de trois filtres colorés en chacune des trois couleurs complémentaires (jaune, magenta, cyan) disposées dans le faisceau lumineux issu d'une source de lumière blanche, destiné à corriger les dominances de couleurs provenant soit de cette lumière, soit de l'utilisation de papiers, de films ou de procédés de tirage différents. On règle chacun de ces trois filtres en fonction de la densité de lumière que l'on désire. Comme on le sait, cette densité d = log I/T où T est la transmission de la lumière. Donc si d = 0, la transmission est maximum, car il n'y a pas de filtrage; en revanche, plus la densité augmente, plus la lumière est filtrée. On arrête généralement le filtrage à une valeur voisine de 1,4. De tels filtres soustractifs sont bien connus, de sorte qu'il n'est pas utile de les décrire ici en détail. Il existe actuellement plusieurs types de filtres de réalisations très différentes qui présentent chacun des avantages et des inconvénients.

Dans le brevet US-A6-4 018 527, on a décrit un filtre pour tireuse photographique dans lequel le jeu de filtres est actionné par des bagues tournantes. Mais ici, l'ensemble est mécaniquement complexe et est fragile par suite des liaisons mécaniques entre des différents éléments. Dans le brevet français FR-A-1 219 275, les commandes sont effectuées par des tiges qui agissent sur les filtres grâce à un jeu de cames et de renvois d'angles, ce qui est également mécaniquement complexe et délicat à manipuler.

L'invention vise un nouveau type de filtre soustractif pour le tirage de films photographiques en couleur, constitué par trois filtres élémentaires superposés réglables individuellement, et à travers lesquels passe la lumière à filtrer, caractérisé en ce que chaque filtre élémentaire comprend :

— une partie centrale cylindrique fixe, percée en son centre d'un canal axial pour le passage de la lumière et en surface d'un fraisage radial,

— une bague tournante, concentrique à ladite partie centrale cylindrique fixe, présentant une graduation sur sa périphérie circulaire, et dont l'intérieur forme une rampe à progression logarithmique,

— un porte-filtre formé par un cadre apte à coulisser dans ledit fraisage radial de la partie centrale cylindrique fixe, dont le bas a la forme d'une pointe arrondie prenant appui sur ladite rampe à progression logarithmique, et dont le haut présente un ressort prenant appui sur une pièce fixée à la périphérie de la partie centrale fixe, le cadre de ce porte-filtre comprenant une fenêtre sur le bas de laquelle est monté le filtre proprement dit.

Avantageusement et en pratique :

— la différence de pas de la rampe à progression logarithmique, lorsque l'on a accompli un tour complet de la bague tournante, correspond sensiblement à la hauteur du canal pour le passage de la lumière de la partie centrale fixe de sorte que l'on peut, soit laisser passer intégralement toute la lumière blanche dans ce canal, soit au contraire la filtrer en quasi-totalité ;

— le canal est rectangulaire ;

— chaque partie centrale fixe est accolée sur sa face opposée à celle portant le fraisage, à une embase cylindrique, dont le diamètre correspond sensiblement au diamètre de la bague tournante.

— les trois filtres élémentaires sont accolés les uns aux autres par des vis de fixation traversant les parties centrales fixes de sorte que chaque porte-filtre prend appui d'un côté sur la face avant de sa partie centrale fixe et ce dans le fraisage prévu à cet effet et de l'autre sur la face arrière de la partie centrale fixe du filtre précédent et plus précisément sur l'embase cylindrique solidaire de cette partie centrale ;

— l'ensemble filtrant formé par ces trois filtres élémentaires est associé d'un côté à une lampe d'exposition et de l'autre à un diffuseur de lumière ;

— le diffuseur de lumière est formé de disques bombés destinés à rendre le flux de lumière homogène sur toute sa section ;

— l'ensemble lampe-éléments filtrants-diffuseur présente, côté diffuseur, des broches permettant de le solidariser avec l'objectif et à travers lesquelles passe le courant électrique d'alimentation de la lampe.

La manière dont l'invention peut être réalisée et les avantages qui en découlent ressortiront mieux de l'exemple de réalisation qui suit, donné à titre indicatif et non limitatif, à l'appui des figures annexées :

La figure 1 montre, vu en coupe, un ensemble lampe-filtre-diffuseur conforme à l'invention.

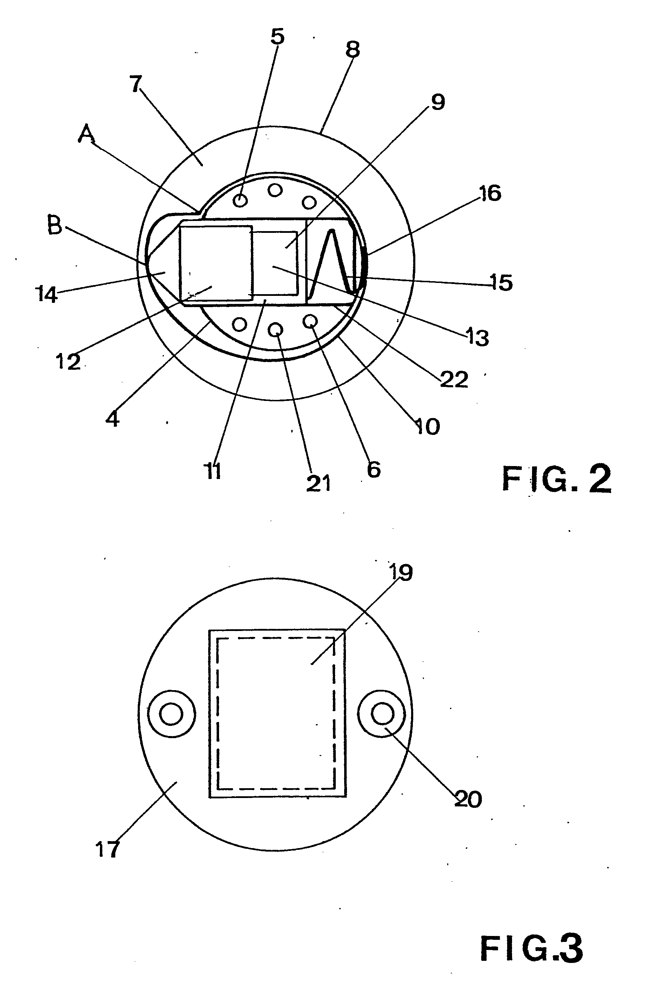

La figure 2 représente en coupe transversale cet ensemble au niveau d'un filtre élémentaire selon l'axe I-I'.

La figure 3 représente, vu de côté, la sortie du diffuseur.

La figure 4 est une vue perspective de la partie centrale fixe.

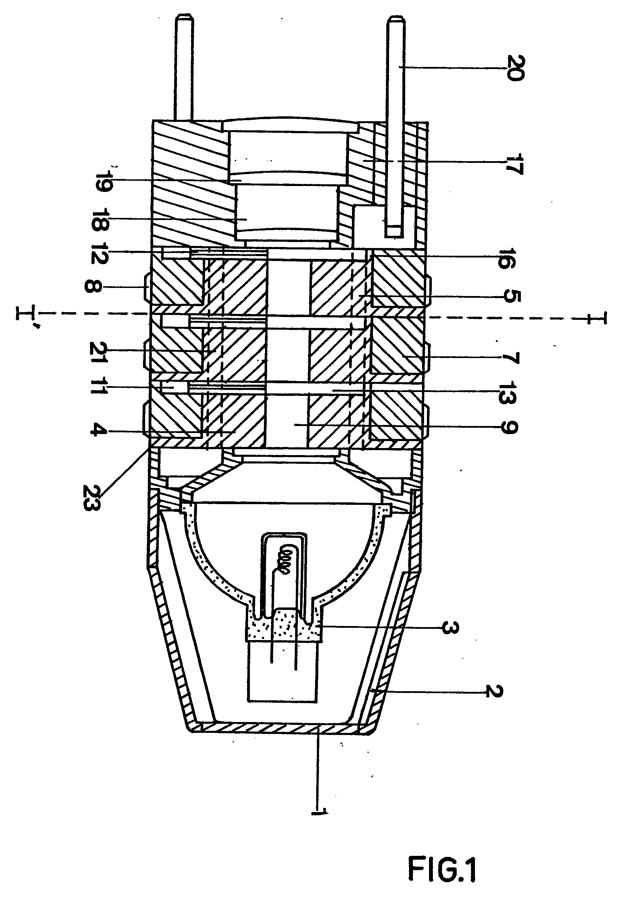

En se référant à la figure 1, la lampe d'exposition comporte :

— un capot (1), par exemple en aluminium, dans lequel sont ménagées des fentes d'aération (2),

— une lampe d'exposition (3) proprement dite, par exemple une lampe quartz-halogène Sylvania 100 W.

L'ensemble filtrant se compose de trois parties élémentaires identiques maintenues entre elles et solidaires du capot (1) par des vis de fixation (5) et (6). Chaque partie élémentaire se compose :

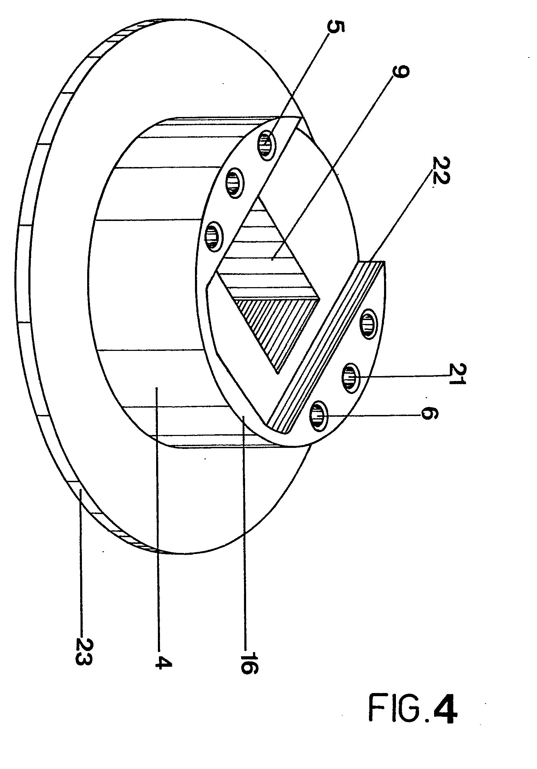

— d'une partie centrale fixe cylindrique (4) (voir figure 4) présentant en son centre un canal rectangulaire (9) pour le passage de la lumière blanche issue de la lampe (3) ; cette partie centrale (4) est solidaire d'une embase (23) qui apparaît en périphérie et porte un repère de réglage ; de même, cette partie fixe cylindrique présente sur la face opposée à cette embase (23) un fraisage (22) destiné à recevoir le porte-filtre et présentant à une extrémité une pièce d'appui (16) pour le ressort (15), en forme de secteur de cercle sécant ;

— d'une bague tournante (7), présentant à sa périphérie circulaire une graduation (8) allant par exemple de 0 (transmission totale de la lumière, car le filtre correspondant ne coïncide pas du tout avec le canal (9)) à 140 (transmission minimum de la lumière, car le filtre correspondant recouvre presque totalement ce canal (9)) ; la partie intérieure de ces bagues tournantes (7) concentriques à la partie centrale fixe cylindrique (4) a la forme d'une rampe à progression logarithmique (10) ; le départ A de cette rampe (10) coïncide à la graduation (140), c'est-à-dire qu'en ce point A, le rayon de la rampe (10) est à peine supérieur au rayon de la partie centrale cylindrique fixe (4), alors qu'en revanche l'arrivée B coïncide à la graduation 0, c'est-à-dire qu'en ce point B, le rayon de la rampe (10) est sensiblement égal à la somme du rayon de la partie centrale fixe cylindrique (4) et de la hauteur du canal (9) ;

— d'un porte-filtre dont la largeur et la hauteur correspondent sensiblement à celles du fraisage (22) qui comprend ;

un cadre rectangulaire (11) à la partie basse duquel est placé le filtre (12) proprement dit et dont la partie haute (13) forme une fenêtre ;

une pointe arrondie (14) solidaire du cadre (11) destinée à venir prendre appui sur la rampe à progression logarithmique (10) ; une lame de ressort de pression tarée (15) qui prend appui sur une pièce (16) rapportée à cet effet à l'extrémité du fraisage (22) de la partie centrale cylindrique fixe (4) ;

la longueur de l'ensemble du cadre (11), pointe arrondie (14), ressort (15) comprimés est sensiblement égal à la longueur de ce fraisage (22).

La lumière issue de l'ensemble filtrant se trouve filtrée en bas du canal (9), alors que la lumière blanche est située sur le haut. Il importe donc de mélanger cette lumière. Pour ce faire, de manière connue, on accole à l'élément filtrant selon l'invention, un diffuseur qui se compose essentiellement d'un corps creux fixe (17), maintenu avec l'ensemble filtrant et la lampe par les mêmes vis (5) et (6). Ce corps creux à conicité divergente présente trois étages de diffusion (18) comprenant chacun un disque diffuseur proprement dit (19) en matière plastique translucide, bombé pour rendre le flux de lumière homogène dans toute la section.

La face avant du corps creux (17) présente deux broches (20) destinées, d'une part à solidariser l'ensemble avec la partie optique (objectif + diaphragme), et d'autre part, à assurer le passage du courant électrique d'alimentation de la lampe (3) grâce à des fils disposés dans le conduit (21) percé à cet effet dans la partie centrale cylindrique (4).

En pratique, toutes les pièces, hormis les diffuseurs (19), les broches 20), les filtres (12) et la lampe (3) sont, soit en aluminium, soit en métal injecté (zamac).

Le filtre soustractif selon l'invention fonc-tionnne de la manière suivante :

En fonction de la nature et de la qualité à la fois du film que l'on désire reproduire et du papier sensible que l'on utilise, ainsi que les procédés mis en œuvre, on règle des graduations (8). Ainsi, en faisant tourner la bague (7), on comprime le ressort (15) et on fait se déplacer la pointe arrondie (14) sur la rampe (10). En d'autres termes, on fait monter ou descendre le filtre (12) devant le canal (9) et on déplace la fenêtre (13) au-delà de ce canal (9). On obstrue donc ainsi plus ou moins la section de ce canal (9). En d'autres termes, on effectue le filtrage.

Le filtre soustractif conforme à l'invention présente de nombreux avantages par rapport aux filtres commercialisés à ce jour. On peut citer :
— sa compacité,
— sa simplicité,
— sa facilité de construction,
— son interchangeabilité en fonction des films à reproduire, donc la possibilité d'avoir des ensembles préréglés.

## Revendications

1. Filtre soustractif pour le tirage de films photographiques en couleur constitué par trois filtres élémentaires superposés réglables individuellement et à travers lesquels passe la lumière à filtrer, caractérisé en ce que chacun des trois filtres élémentaires comprend :
— une partie centrale cylindrique fixe (4) percée en son centre d'un canal (9) axial pour le passage de la lumière et en surface d'un fraisage radial (22) ;
— une bague tournante (7), concentrique à ladite partie centrale cylindrique fixe (4), présentant une graduation (8) sur sa périphérie circulaire et dont l'intérieur a la forme d'une rampe (10) à progression logarithmique ;
— un porte-filtre formé par un cadre (11) apte à coulisser dans ledit fraisage radial (22) de la partie centrale cylindrique fixe, dont le bas a la forme d'une pointe arrondie (14) prenant appui sur ladite rampe (10) et dont le haut présente un ressort (15) prenant appui sur une pièce (16) fixée à la périphérie de la partie centrale fixe (4), le cadre (11) de ce porte-filtre comprenant une fenêtre (13) sur le bas de laquelle est monté le filtre (12) proprement dit.

2. Filtre soustractif selon revendication 1, caractérisé en ce que pour un tour complet de la bague tournante (7), la différence de pas de la rampe à progression logarithme (10) correspond à la hauteur du canal (9) pour le passage de la lumière.

3. Filtre soustracitf selon l'une des revendications 1 et 2 caractérisé en ce que la partie centrale fixe (4) est accolée sur sa face opposée à celle portant le fraisage (22) à une embase cylindrique (23) dont le diamètre correspond sensiblement au diamètre extérieur de la bague tournante (7).

4. Filtre soustractif selon l'une des revendications 1 à 3, caractérisé en ce que chaque porte-filtre prend appui d'un côté sur le fond du fraisage (22) de la face avant de sa partie centrale cylindrique fixe (4) et de l'autre sur la face arrière de l'embase (23) solidaire de la partie centrale cylindrique fixe (4) de l'élément filtrant précédent.

5. Filtre soustractif selon l'une des revendications 1 à 4 caractérisé en ce que le canal (9) est rectangulaire.

6. Filtre soustractif selon l'une des revendications 1 à 5, caractérisé en ce que la hauteur et la largeur du cadre (11) porte-filtre sont égales à la hauteur et la largeur du fraisage (22) et en ce que la longueur de l'ensemble cadre (11) porte-filtre, pointe arrondie (14) et ressort (15) comprimé est égal à la longueur dudit fraisage (22).

7. Filtre soustractif selon l'une des revendications 1 à 6, caractérisé en ce que le ressort (15) est une lame de ressort.

8. Filtre soustractif selon l'une des revendications 1 à 7, caractérisé en ce que la pièce (16) d'appui du ressort de compression (15) a la forme d'un secteur de cercle sécant.

9. Filtre soustractif selon l'une des revendications 1 à 8, caractérisé en ce qu'il est accolé, d'un côté à une lampe d'exposition (3), et de l'autre à un ensemble diffuseur (17-19), tous ces éléments étant solidarisés entre eux au moyen de vis de fixation (5-6) traversant les parties centrales fixes cylindriques (4).

10. Filtre soustractif selon revendication 9, caractérisé en ce que l'ensemble diffuseur (17-19) présente sur sa face libre des broches (20) destinées à solidariser l'ensemble à l'objectif et à permettre le passage du courant électrique d'alimentation de la lampe d'exposition (3), grâce à des fils de connection passant au travers de conduits (21) ménagés à cet effet dans les parties centrales cylindriques fixes (4).

**Claims**

1. Subtractive filter for the printing of color photographic films comprising three individually superposed adjustable elementary filter portions through which the light to be filtered passes, characterized by the fact that each of the three elementary filter portions comprising :
— a fixed cylindrical central portion (4) having at its center an axial channel (9) for the passage of the light and a radial milled slot (22) on its surface ;
— a rotary ring (7) positionel concentrically with said fixed cylindrical central portion (4) said rotary ring having a graduation (8) on its circular periphery and having an internal surface comprising a logarithmically progressive ramp (10) ;
— a filter holder comprising a frame (11) adapted to slide in said radial milled slot (22) in said fixed cylindrical central portion, the bottom of said frame having the shape of a rounded point (14) which abuts said ramp (10) and the top of said frame having a spring (15) which rests against a receiving part (16) fixed to the periphery of the said fixed central portion (4), said frame (11) of said filter holder having a window opening (13) on the lower portion of which is set the said filter element (12).

2. Subtractive filter according to claim 1, wherein for a complete revolution of said rotary ring (7) the difference in pitch of said logarithmically progressive ramp (10) corresponds to the height of said channel (9) for the passage of the light.

3. Subtractive filter according to any claims 1 and 2, wherein each of said fixed cylindrical central portion (4) is coupled on its face opposed to this one containing said radial milled slot (22) to a cylindrical base (23), having a diameter substantially equal to the outside diameter of said rotary ring (7).

4. Subtractive filter according to any claims 1 to 3, wherein each filter holder rests against one side on the bottom of said milled slot (22) on the front face of its fixed cylindrical central portion (4) and on the second side against the rear face of the base (23) connected to the fixed cylindrical central portion (4) of the adjacent filter.

5. Subtractive filter according to any claims 1 to 4, wherein said channel (9) is rectangular.

6. Subtractive filter according to any claims 1 to 5, wherein the thickness and width of said frame (11) are equal to the depth and width of said milled slot (22) and wherein the length of the assembly comprising : the frame (11), the rounded point (14) and the spring (15) in its compressed state is equal to the length of said milled slot (22).

7. Subtractive filter according to any claims 1 to 6, wherein said spring (15) is a spring blade.

8. Subtractive filter according to any claims 1 to 7, wherein said receiving part (16) of the spring (15) has the shape of a secant circular sector.

9. Subtractive filter according to any claims 1 to 8, comprising on a side an exposure lamp (3) and on the other side a diffuser assembly (17-19), all these elements being rigidly connected to each other by fastening screws (5-6) which pass through said fixed cylindrical central portions (4).

10. Subtractive filter according to claim 9, wherein said diffuser assembly (17-19) comprises on its free face pins (20) adapted to secure the assembly to a lens and to permit the passage of electric current to said exposure lamp (3), by means of connecting wires passing through passages (21) provided into said fixed cylindrical central portions (4).

**Ansprüche**

1. Substraktivfilter für den Abzug von Farbfilmen, das aus drei überlagerten, individuell regelbaren Elementarfiltern gebildet ist, durch die das zu filternde Licht hindurchtritt, dadurch gekennzeichnet, daß jedes der drei Elementarfilter umfaßt :
— ein feststehendes zylindrisches Mittelteil (4), das in seinem Zentrum von einem axialen Kanal (9), für den Durchgang des Lichtes durchsetzt ist und in der Stirnfläche eine radiale Ausfräsung (22) aufweist ;

— einen zu dem feststehenden zylindrischen Mittelteil (4) konzentrischen Drehring (7), der an seinem Umfang eine Gradeinteilung (8) aufweist und dessen Inneres die Form einer logarithmisch ansteigenden Rampe (10) hat ;

— einen Filterträger, der aus einem Rahmen (11) gebildet ist, der in der radikalen Ausfräsung (22) in dem feststehenden zylindrischen Mittelteil (4) verschiebbar ist, dessen Unterteil in form einer abgerundeten Spitze (14) sich auf der Rampe (10) abstützt und dessen Oberteil eine Feder (15) aufweist, die sich auf einem Auflagerteil (16) abstützt, das an der Peripherie des feststehenden Mittelteils (4) befestigt ist, wobei der Rahmen (11) des Filterträgers ein Fenster (13) aufweist, an dessen Unterseite das eigentliche Filter (12) montiert ist.

2. Substraktivfilter nach Anspruch 1, dadurch gekennzeichnet, daß bei einer vollständigen Umdrehung des Drehrings (7) die Gangdifferenz der logarithmisch ansteigenden Rampe (10) der Höhe des Kanals (9) für den Durchgang des Lichtes entspricht.

3. Substraktivfilter nach einem der Ansprüche 1 oder 2, dadurch gekennzeichnet, daß das feststehende Mittelteil (4) mit seiner der Ausfräsung (22) entgegengesetzten Oberfläche an eine zylindrische Fußplatte (23) angesetzt ist, deren Durchmesser im wesentlichen dem Außendurchmesser des Drehrings (7) entspricht.

4. Substraktivfilter nach einem der Ansprüche 1 bis 3, dadurch gekennzeichnet, daß jeder Filterträger einerseits auf dem Boden der Ausfräsung (22) der Vorderseite seines feststehenden zylindrischen Mittelteils (4) anliegt und andererseits an der Rückwand der Fußplatte (23), die mit dem feststehenden zylindrischen Mittelteil (4) des vorhergehenden Filterelementes fest verbunden ist.

5. Substraktivfilter nach einem der Ansprüche 1 bis 4, dadurch gekennzeichnet, daß der Kanal (9) rechteckig ist.

6. Substraktivfilter nach einem der Ansprüche 1 bis 5, dadurch gekennzeichnet, daß die Höhe und die Breite des Filterträgerrahmens (11) gleich der Höhe und der Breite der Ausfräsung (22) sind und daß die Länge der gesamtheit Filterträger-Rahmen (11), abgerundete Spitze (14) und zusammengedrückte Feder (15) gleich der Länge dieser Ausfräsung (22) ist.

7. Substraktivfilter nach einem der Ansprüche 1 bis 6, dadurch gekennzeichnet, daß die Feder (15) eine Blattfeder ist.

8. Substraktivfilter nach einem der Ansprüche 1 bis 7, dadurch gekennzeichnet, daß das Auflagerteil (16) der Druckfeder (15) die form eines abgeflachten kreissektors hat.

9. Substraktivfilter nach einem der Ansprüche 1 bis 8, dadurch gekennzeichnet, daß es auf einer Seite an eine Belichtungslampe (3) und auf der anderen Seite an eine Diffusor-Anordnung (17-19) angeschlossen ist, wobei alle diese Elemente untereinander mittels Befestigungsschrauben (5-6) befestigt sind, die die feststehenden zylindrischen Mittelteile (4) durchqueren.

10. Substraktivfilter nach Anspruch 9, dadurch gekennzeichnet, daß die Diffusor-Anordnung (17-19) auf ihrer freien Oberfläche Stifte (20) aufweist, die zur Befestigung des Ganzen am Objektiv bestimmt sind und für die Zuführung des elektrischen Speisestromes der Belichtungslampe (3) mit Hilfe von Verbindungsdrähten, die durch Kanäle (21) verlaufen, die zu diesem Zweck in den feststehenden zylindrischen Mittelteilen ausgespart sind.

FIG.1

FIG. 2

FIG.3

2

FIG.4